# EUROPEAN PATENT APPLICATION

(11) **EP 1 353 331 A2**
(43) Date of publication of application: **15.10.2003**
(21) Application number: 03252307.8
(22) Date of filing: 11.04.2003
(51) Int. Cl.: G11B 20/00, G11B 19/12

(54) **Optical disk reproduction apparatus and optical disk reproduction controlling method**

(30) Priority: 12.04.2002 JP 2002110169
(71) Applicant: MATSUSHITA ELECTRIC INDUSTRIAL CO., LTD., Kadoma-shi, Osaka 571-8501 (JP)
(72) Inventor: Yamada, Jiro, Soraku-gun, Kyoto 619-0237 (JP)
(74) Representative: Rackham, Stephen Neil

(57) **Abstract**

An encryption decoder 6 detects encryption in each digital audio contents unit, and a wobble detector 13 detects a wobble pattern of an optical disk, and in the case where the contents data is encrypted, the controller determines whether the wobble pattern is present or not, and when the wobble pattern is present, the reproduction is stopped, and when the wobble pattern is not present, the reproduction is controlled based on the digital CCI. In the case where the contents data is not encrypted, the reproduction is controlled based on the watermark CCI regardless of presence or absence of the wobble pattern, thus excluding reproduction of an unauthorized copy disk.

## Description

The present invention generally relates to a reproduction control method and apparatus for controlling a system stream of multi-media data including recorded digital audio data, and particularly to an optical disk reproduction apparatus and method for inhibiting reproduction of contents from an illegally copied digital disk.

In recent years, there have been spread and marketed a variety of movie titles and music titles in a form of DVD-Video and DVD-Audio mediums rapidly improved in storage capacity, which are now taken in place of laser disks, video CDs, and other conventional formats. DVD-Video and DVD-Audio standard disks carry digital audio and video data at higher quality.

In order for inhibiting any unauthorized digital copy of such high quality digital data, the copy control thereof is performed using digital copy control information (hereinafter, abbreviated to as "digital CCI") and electronic watermark copy control information (hereinafter, abbreviated to as "watermark CCI" or "WMCCI") which are both included in a system stream.

While some AV digital apparatuses are equipped with an advanced, secure digital I/F (e.g. IEEE1394 I/F) arranged for identifying an external apparatus to be connected and allowing transfer of encrypted data, others include a common, non-secure digital I/F (e.g. IEC60958) which has no measure for identifying an external apparatus to be connected and which transfers unencrypted data. Digital recorders equipped with non-secure I/F having no watermark detector are mostly available on the market, while digital recorders equipped with secure I/F is minority.

Namely, most of AV reproduction apparatuses use the non-secure digital I/F alike in the present stage. The non-secure digital I/F is hardly designed to identify an authorized apparatus, and permits reception and transfer of digital data from any illegally modified or unauthorized recorder. The non-secure digital I/F also fails to encrypt data to be transmitted, which results in that the security of data will rarely be guaranteed.

As an internet system has overwhelmingly been spread worldwide, a great number of web sites are provided on the internet. Some web sites provide a service for having AV contents data uploaded from a user through a personal computer (hereinafter, referred to as "PC") using a non-secure digital I/F and downloading the same to other users without any charge through a PC using a non-secure digital I/F.

If one of the users produces and uploads an unauthorized copy of AV contents data to a web site, the other users can freely download the unauthorized copied data from the web site without having permission of a provider treating AV contents data. This will cause serious damage to the AV content data provider of movie and music titles in the case where unauthorized copies thereof are spread throughout the market.

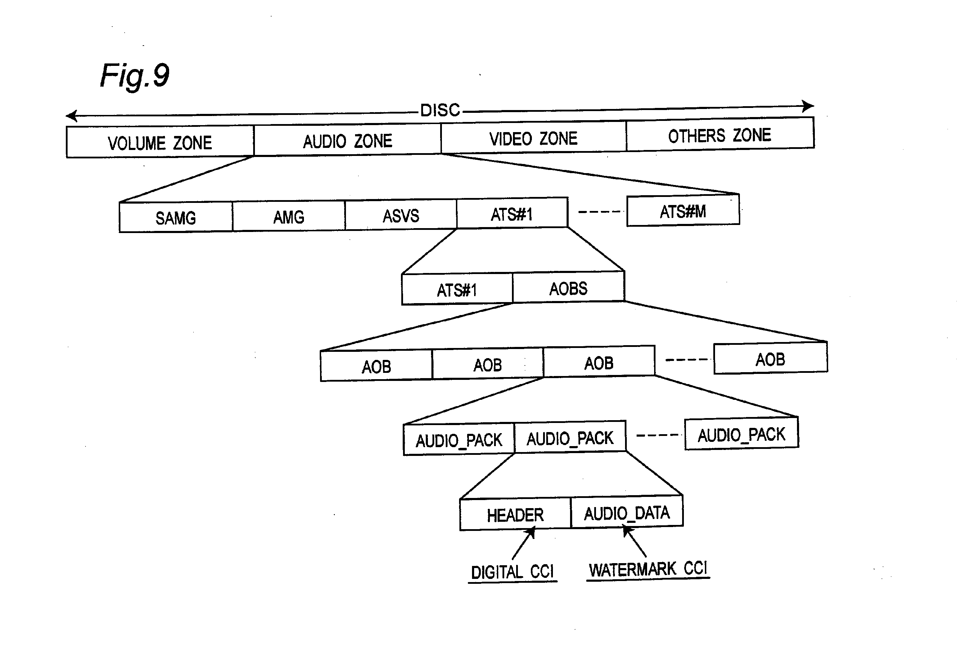

In the conventional copy control system, the digital CCI and watermark CCI are included in a system stream so that unauthorized analog and digital copies are inhibited in a recorder having a watermark CCI detector. An example of a data structure of such a conventional system stream is shown in Fig. 9. As illustrated, the digital CCI is carried in Header portion of Audio Pack while the watermark CCI is carried out in Audio data portion of Audio Pack.

In such a conventional copy control system, however, once all data of the system stream including encrypted data as well as contents data are copied from an original disk, the copied data may be reproduced using a common optical disk reproduction apparatus. As a result, enormous unauthorized copy disks can be made, which are reproducible by a conventional optical disk reproduction apparatus. If the data of such enormous unauthorized copy disks is reproduced by a conventional optical disk reproduction apparatus, there arises a problem that enormous digital copies are illegally made via a non-secure digital I/F.

For example, in a conventional optical disk reproduction apparatus as disclosed in Japanese Patent Laid-open Publication 2001-229612, the reproduction of a system stream including both digital CCI and watermark CCI is controlled according to the digital CCI when the digital CCI included in each content unit is encrypted. On the other hand, when the digital CCI is not encrypted, the reproduction of a system stream is controlled according to the watermark CCI.

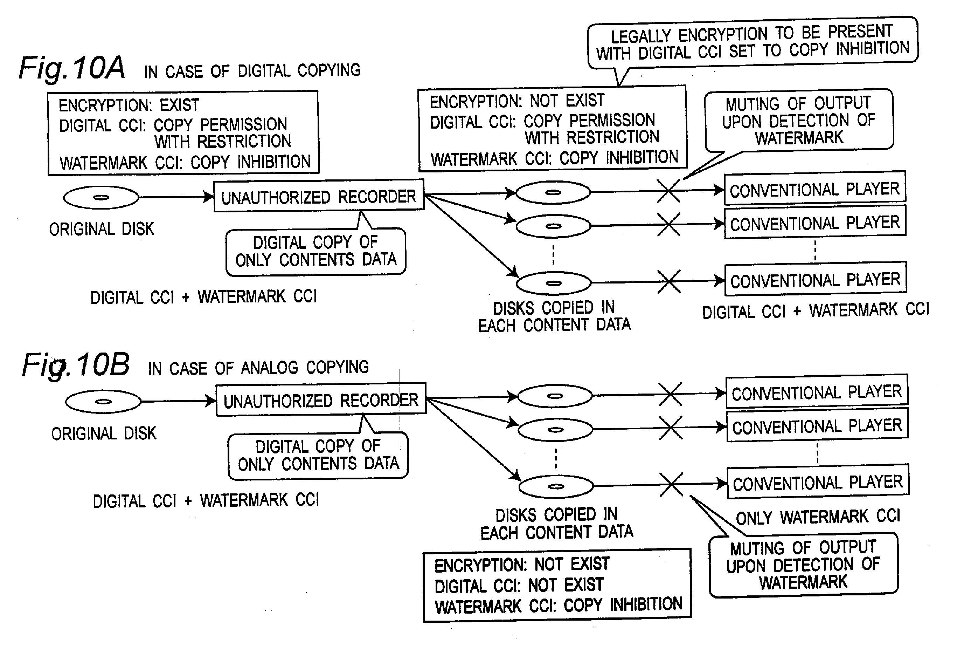

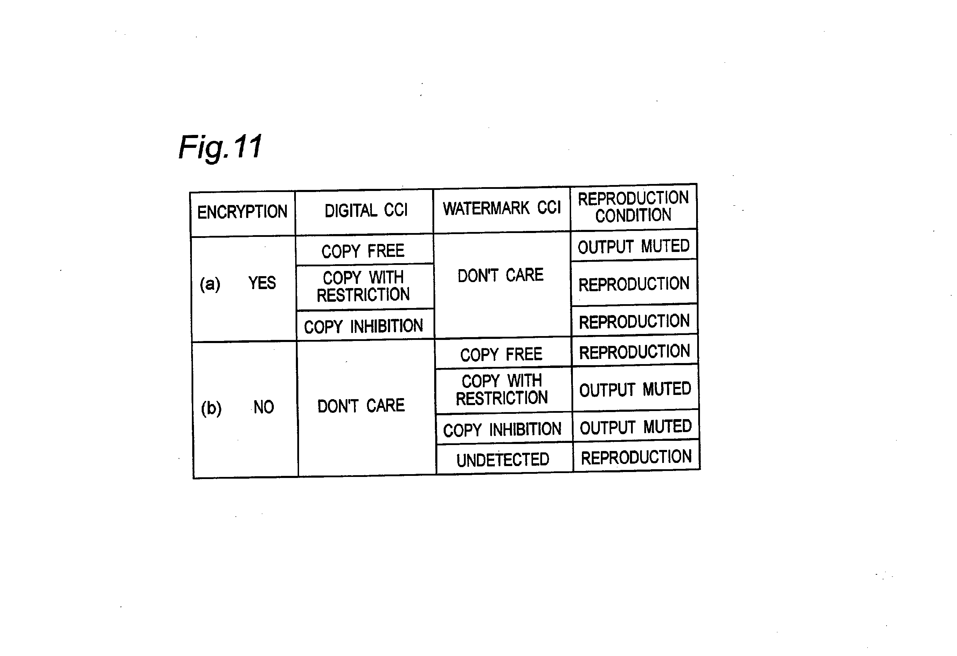

The reproduction operation of contents copy in this conventional optical disk reproduction apparatus is described below referring to Figs. 10A, 10B and 11. It is assumed that an original disk is a commercially available press-formed disk having recording pits where the contents data is encrypted with the digital CCI set for copy permission with restriction and the watermark CCI set for copy inhibition.

Fig. 10A shows the case where the contents data of this original disk is digitally copied by an unauthorized recorder to produce a huge number of digitally copied disks. As shown in Fig. 10A, since the contents data of each of the copied disks is recorded in a format with the encryption thereof deciphered (decoded), the contents data is not encrypted and the digital CCI is set for copy permission with restriction while the watermark CCI is set for copy inhibition.

When the copied disk is reproduced by the conventional optical disk reproduction apparatus, the reproduction control is performed according to an operation pattern of Column (b) shown in Fig. 11. More specifically, as the contents data is not encrypted, the reproduction is controlled according to the watermark CCI which is set for copy inhibition in this case.

Thus, it is detected that the condition of the watermark CCI is not set for copy free and the used disk is judged to be an unauthorized disk to thereby mute the output of the reproduction apparatus. As the result, any copy disk having its contents digitally copied illegally from the original disk can be avoided. Note that Column (a) in Fig. 11 shows an operation pattern of a reproduction control when the contents data is encrypted and encryption exists in the used disk.

Fig. 10B shows the case where the contents data of this original disk is analog-copied by an unauthorized recorder to produce a huge number of illegally copied disks. As shown in Fig. 10B, since the contents data of each of the copied disks is recorded in a format with the encryption thereof deciphered (decoded), the contents data is not encrypted and the digital CCI does not exist because of analog copying while the watermark CCI is set for copy inhibition.

When the copied disk is reproduced by the conventional optical disk reproduction apparatus, the reproduction control is performed according to an operation pattern of Column (b) shown in Fig. 11. Thus, the reproduction is controlled according to the watermark CCI and the used disk is judged to be an unauthorized disk to thereby mute the output of the reproduction apparatus. As the result, any copy disk having its contents analog-copied illegally from the original disk can be avoided.

Another conventional optical disk reproduction apparatus is disclosed in Japanese Patent Laid-open publication 7-272282 (Japanese Patent Gazette 3061098). In this conventional optical disk reproduction apparatus, an optical disk to be reproduced has a specific pattern of pits in a data track in which a group of the pits are aligned in a wobble form. This allows the specific pattern of pits to be used for examining whether the optical disk is an authorized copied one or not. If an authorized copied disk is used, the specific pattern of pits is detected and the optical disk is regarded as an unauthorized one to be discarded.

In the conventional copy control system disclosed in the first document, however, once all the data on the original optical disk is copied, enormous unauthorized copy disks can be made, and if the data of such enormous unauthorized copy disks is reproduced by a conventional optical disk reproduction apparatus, enormous digital copies can be illegally made without any limitation, so that an unauthorized copy may multiply be duplicated in the same generation. Specifically, when the whole data on the disk is illegally copied bit by bit, the unauthorized copy disk can hardly be identified by the conventional optical disk reproduction apparatuses and fail to be discarded.

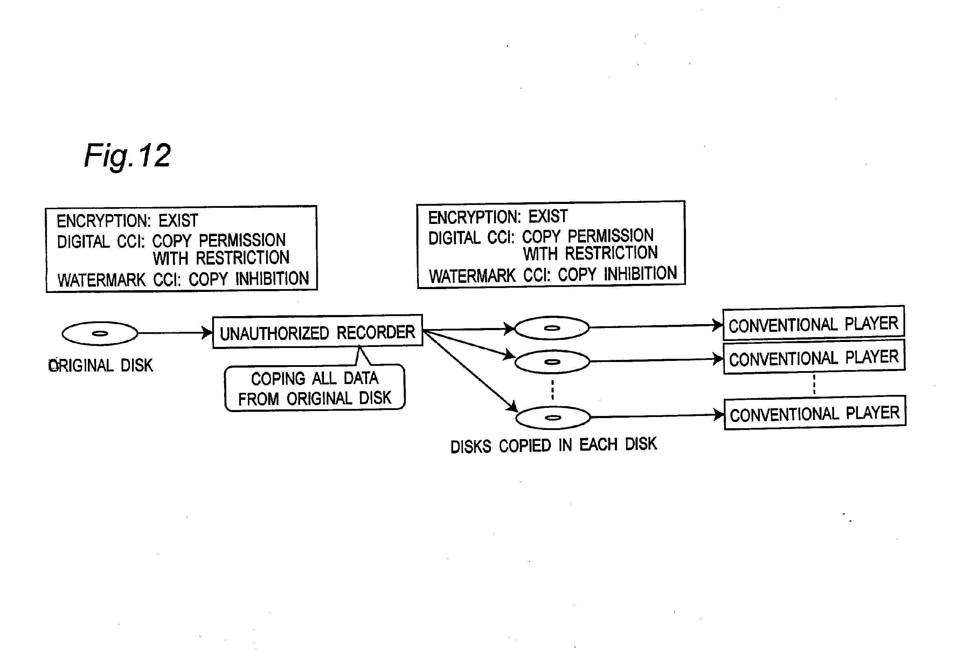

The problem of the reproduction control of the above conventional arrangement will be described referring to Fig. 12. All the digital data including contents data in the encrypted format of an original disk is digitally copied by an unauthorized recorder to produce enormous unauthorized copy disks. The data of each copy disk is encrypted and contains the digital CCI set for copy permission with restriction and the watermark CCI set for copy inhibition.

When the copy disk is reproduced by a conventional optical disk reproduction apparatus, the reproduction control is performed according to the operation pattern shown in Column (a) in Fig. 11, and thus the copy disk is treated as an authorized one to thereby perform a normal reproduction, in other words, an unauthorized copy disk can hardly be identified and avoided in the conventional optical disk reproduction apparatus.

As described above, in the conventional copy control system, an unauthorized copy disk is detected by using a combination of the digital CCI and the watermark CCI. However, if the whole digital data of the original disk is copied to produce a copy disk as in a bit-by-bit manner prior to a decoding step of, e.g., decryption, the copied digital data can hardly be identified as an unauthorized copy.

Thus, once the whole digital data is copied from a press-formed original disk, one generation copy disks can be indefinitely produced thereafter and the unauthorized copy of the same generation can multiply be duplicated without limitation. As a result, the AV digital contents data may be possibly duplicated to produce a huge number of unauthorized digital copies at high quality or even higher in the future without deteriorating the quality to be spread on the market. This will be a most fear for a content provider producing and providing movie and music titles.

On the other hand, the conventional arrangement disclosed in the second document requires a dedicated device for adding a specific pattern of pits to the main data to be recorded on the original disk, hence increasing the overall cost of the production to be a problem.

The present invention has been developed in view of the above problems and its object is to provide an optical disk reproduction apparatus and an optical disk reproduction controlling method for preventing reproduction of any unauthorized copy disk by detection of a wobble pattern on the disk in addition to a combination of the digital CCI and the watermark CCI.

In order to achieve the object mentioned above, one aspect of the present invention provides an optical disk reproduction apparatus for reproducing digital audio data containing at least one of electronic watermark copy control information and digital copy control information recorded on an optical disk. The reproduction apparatus includes: an encryption detector for detecting encryption in each digital audio contents unit of the digital audio data under reproduction; a wobble detector for detecting a wobble pattern formed on the optical disk; and a controller for controlling the reproduction using a detection result of the encryption detector and a detection result of the wobble detector. In the case where the contents data is encrypted, the controller determines whether the wobble pattern is present or not, and when the wobble pattern is present, the controller stops the reproduction, and when the wobble pattern is not present, the controller controls the reproduction based on the digital copy control information.

Another aspect of the present invention provides an optical disk reproduction controlling method in reproducing digital audio data containing at least one of electronic watermark copy control information and digital copy control information recorded on an optical disk. The method includes: detecting encryption in each digital audio contents unit of the digital audio data under reproduction; detecting a wobble pattern formed on the optical disk; and controlling the reproduction using a detection result of the encryption detecting and a detection result of the wobble detecting. In the case where the contents data is encrypted, the reproduction controlling includes determining whether the wobble pattern is present or not, and when the wobble pattern is present, the reproduction is stopped, and when the wobble pattern is not present, the reproduction is controlled based on the digital copy control information.

In the above aspects, in the case where the contents data is not encrypted, the reproduction is controlled based on the electronic watermark copy control information regardless of presence or absence of the wobble pattern.

These and other objects and features of the present invention will be readily understood from the following detailed description taken in conjunction with preferred embodiments thereof with reference to the accompanying drawings in which:
Fig. 1 is a block diagram of an optical disk reproduction apparatus according to an embodiment of the present invention;
Fig. 2 is an explanatory view showing a reproduction control of a copy of the whole data of an optical disk according to the embodiment of the present invention;
Fig. 3 is a diagram showing patterns of the reproduction control according to the embodiment of the present invention;
Fig. 4A is a schematic view illustrating a physical format of a press-formed disk;
Fig. 4B is a schematic view illustrating a physical format of a recordable disk;
Fig. 5 is a circuit diagram of a wobble detector used in the embodiment of the present invention;
Fig. 6 is a model diagram showing a wobble detection waveform of the wobble detector shown in Fig. 5;
Figs. 7A, 7B, 7C and 7D are schematic views showing examples of the physical format of an optical disk used in the embodiment of the present invention;
Fig. 8 is a flowchart of an optical disk reproduction control according to the embodiment of the present invention;
Fig. 9 is a diagram showing a data structure and location of copy control information therein;
Figs. 10A and 10B are explanatory views of a conventional optical disk reproduction control in the case of digital and analog copying, respectively;
Fig. 11 is a diagram showing patterns of the conventional reproduction control; and
Fig. 12 is an explanatory view showing a disadvantage of the conventional reproduction control.

Before the description proceeds, it is to be noted that contents data to be recorded on a disk is limited to audio data in the present embodiment and that the contents data to be copyright-protected is primarily encrypted and recorded on the disk.

Referring to digital CCI, if the digital CCI is not encrypted, it may easily be altered. The digital CCI does not exist when an analog copying process is carried out. This is because audio data consists of a series of real data and has no vertical blanking field. It is hence difficult to maintain digital CCI for audio data when executing the analog copying. Whereas, in case of video data, digital CCI for video data is embedded in other fields than the real data fields, such as vertical blanking fields and can be maintained after executing an analog copying.

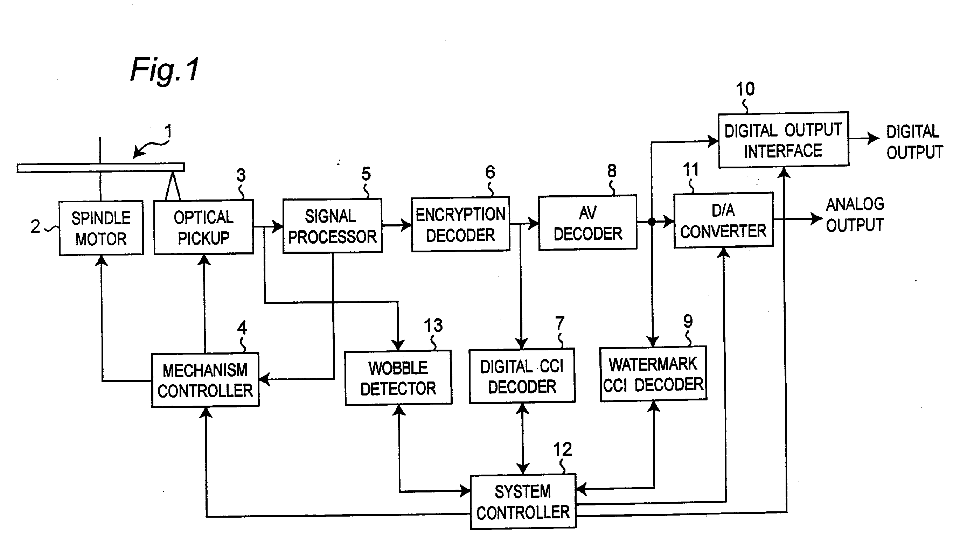

The embodiment of the present invention will be described referring to Figs. 1 to Fig. 8. Throughout the drawings, like components are denoted by like numerals and their explanation is not repeated.

A specific feature of the present embodiment is to detect a wobble pattern of a groove which is formed on a recordable disk without fail and use the detection of the wobble pattern for determining an unauthorized copy disk. It is noted here that the wobble pattern is defined by a meandering sine-wave form of a groove formed in each recordable disk for designating clock timing and the like, and there does not exist such a wobble pattern in any commercially available press-formed original disk. The method and means for detecting the wobble pattern will be described later.

Fig. 1 is a block diagram showing an optical disk reproduction apparatus according to the embodiment of the present invention. As shown in Fig. 1, the optical disk reproduction apparatus includes a spindle motor 2 for rotating a disk 1, an optical pickup 3 for reading data recorded on the disk 1, and a mechanism controller 4 for driving and controlling the spindle motor 2 and the optical pickup 3. A signal processor 5 is provided for data-punching and error correcting of an output of the optical pickup 3 to extract a digital signal of a system stream and supply a control signal to the mechanism controller 4. An encryption decoder 6 is provided for decrypting the encryption of the system stream, and a digital CCI decoder 7 detects digital CCI among from the system stream decrypted by the encryption decoder 6. An AV decoder 8 is provided for extracting and decoding a digital audio signal from the system stream decrypted by the encryption decoder 6.

The optical disk reproduction apparatus further includes a DA converter 11 for converting a digital audio output signal of the AV decoder 8 into an analog audio signal, a digital output interface 10 for converting the digital audio signal to non-secure format output data such as IEC60958 and performing an output control, and a watermark CCI decoder 9 for detecting a watermark CCI from the digital audio output signal of the AV decoder 8. A system controller 12 is provided for controlling each action of the entire parts in the reproduction apparatus.

The optical disk reproduction apparatus further includes a wobble detector 13 for detecting a wobble pattern pre-recorded on the disk 1 through the optical pickup 3. The operation of the wobble detector 13 is controlled by the system controller 12. In specific, the system controller 12 receives wobble detection data indicative of presence or absence of a wobble pattern from the wobble detector 13, receives the digital CCI from the digital CCI decoder 7, and receives the watermark CCI from the watermark CCI decoder 9, thereby controlling the digital output interface 10 and D/A converter 11 as well as the mechanism controller 4 based on the received data.

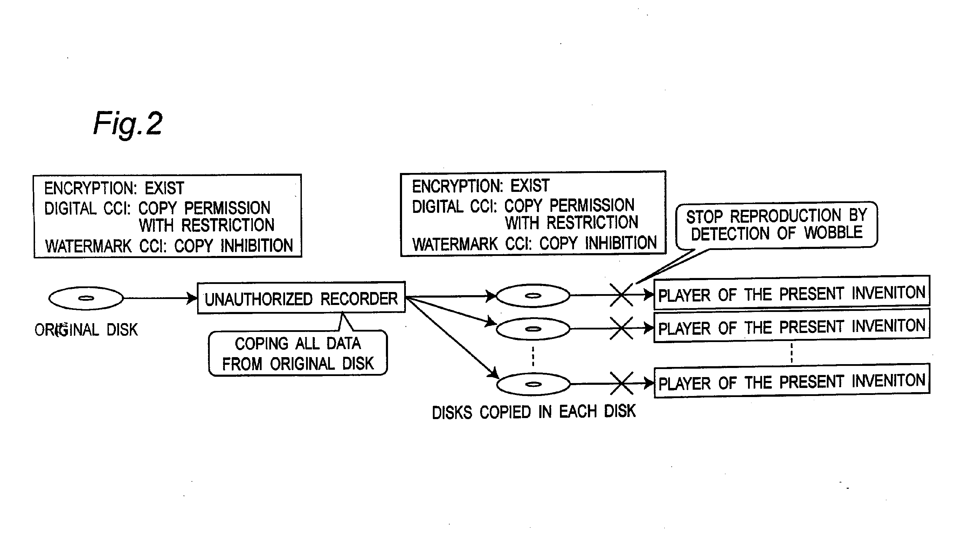

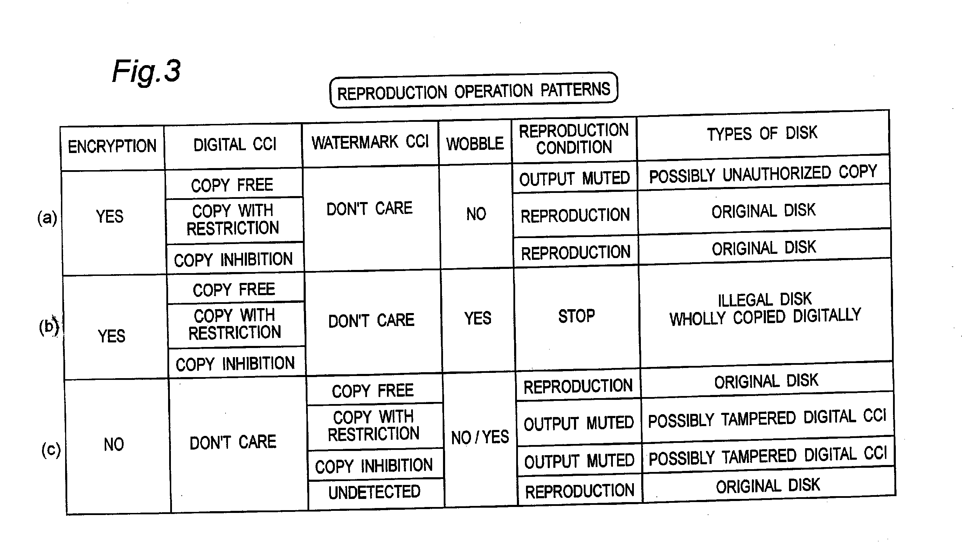

The following describes the reproduction controlling operation when using an unauthorized copy disk in the optical disk reproduction apparatus of this embodiment referring to Figs. 2 and Fig. 3. In this case, it is assumed that the original disk is a commercially available press-formed optical disk on which encrypted contents data is recorded together with digital CCI set for copy permission with restriction and watermark CCI set for copy inhibition.

Fig. 2 shows the case where the whole digital data of a press-formed original disk is illegally digitally copied by an unauthorized recorder to produce a number of unauthorized copy disks. In this case, since the whole digital data copied in each copy disk is identical to that of the original disk, the data illegally copied and recorded on each copy disk is encrypted (i.e., encryption exists) while the digital CCI is set for copy permission with restriction and the watermark CCI is set for copy inhibition.

When the unauthorized copy disk is reproduced by the optical disk reproduction apparatus of the present embodiment, the reproduction control is carried out according to the operation pattern shown in Fig. 3. More specifically, as shown in Fig. 3, the reproduction condition is controlled according to the combination of detection results of: presence or absence of an encryption; conditions of digital CCI and watermark CCI; and presence or absence of a wobble pattern, so that the types of the disks used in the reproduction apparatus are determined to be authorized original (legal) one or unauthorized (illegal) one.

In this case shown in Fig. 2, the whole data illegally copied in each copy disk is encrypted (i.e., encryption exists) and a wobble pattern is detected (as wobble exists) by the wobble detector 13 because a recordable disk is used to produce an unauthorized copy disk in the unauthorized recorder by illegally copying the whole data from the original disk. Accordingly, the copy disk used in the reproduction apparatus of the present embodiment is determined to be an unauthorized one and the reproduction operation is stopped according to the operation pattern shown in Column (b) of Fig. 3.

As compared with a combination of the digital CCI and the watermark CCI used in the conventional reproduction apparatus, the present embodiment further employs the detection of a wobble pattern. This allows any unauthorized copy to be readily identified and discarded by the reproduction control even when using an unauthorized copy disk recorded with the whole data copied in each disk from an original disk.

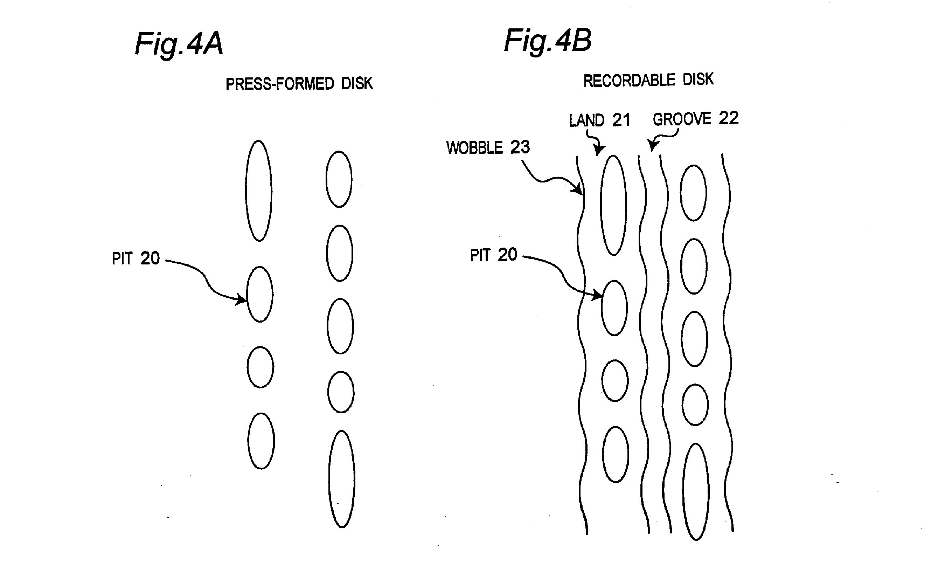

A practical construction of the wobble detector 13 and an operation thereof will be explained referring to Figs. 4 to 7. Figs. 4A and 4B schematically illustrate recording surfaces of a commercially available press-formed disk and a recordable disk, respectively. Referring to a difference between the press-formed disk and the recordable disk, the press-formed disk shown in Fig. 4A has only a row of pits 20 formed by pressing while the recordable disk shown in Fig. 4B has a groove 22 between lands 21 for forming pits 20 thereon. The groove 22 has a wobble pattern 23 configured in a meandering sine-wave form. The wobble pattern is essentially provided on the recordable disk for use in recording address data and generating a clock signal both required for recording the contents data. On the other hand, the commercially available press-formed disk has no wobble pattern because only the pits are formed on the disk by pressing.

Thus, the recordable disk recorded with encrypted contents data containing a wobble pattern can hence be identified as an unauthorized one. When the disk is found unauthorized, an error message thereof is displayed on a display unit. Then, the reproduction of the disk is controlled to be stopped, so that the unauthorized disk is made invalid and unusable even if a lot of such unauthorized disks are produced.

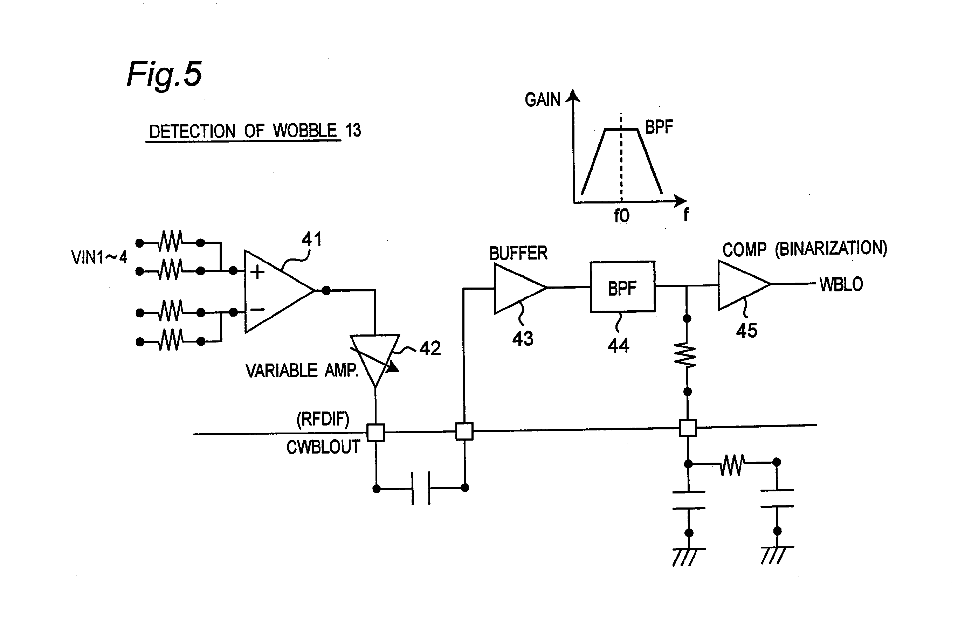

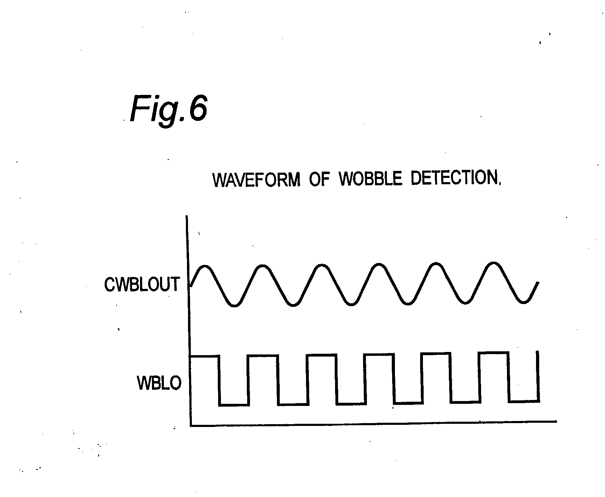

Fig. 5 shows an example of a circuit arrangement of the wobble detector 13 where four separate output signals VIN1 to VIN4 read out through the optical pickup 3 are subjected to addition and subtraction by an adder/subtracter 41. The output signal of the adder/subtracter 41 is amplified by a variable amplifier 42 to produce a signal RFDIF. The signal RFDIF is branched for producing a signal CWBLOUT on a capacitor-connection line while transferred via a buffer 43 to a band-pass filter 44 where the bypass filter 44 extracts a desired frequency from the signal RFDIF. The extracted waveform is binarized by a comparator 45 to produce a binary signal WBLO. Fig. 6 schematically illustrates an example of waveform models of the CWBLOUT output signal and the WBLO binary signal.

Referring to an algorithm for wobble detection, the frequency of the wobble pattern is peculiar to each recordable disk medium (e.g., DVD-R/RW or DVD+R/+RW). The frequency of the binary signal WBLO outputted from the comparator 45 is measured and the value corresponding to the frequency is counted. When the counted value exceeds a threshold within a predetermined duration of measurement, it is judged that the wobble pattern is present and the disk to be reproduced is of a recordable medium.

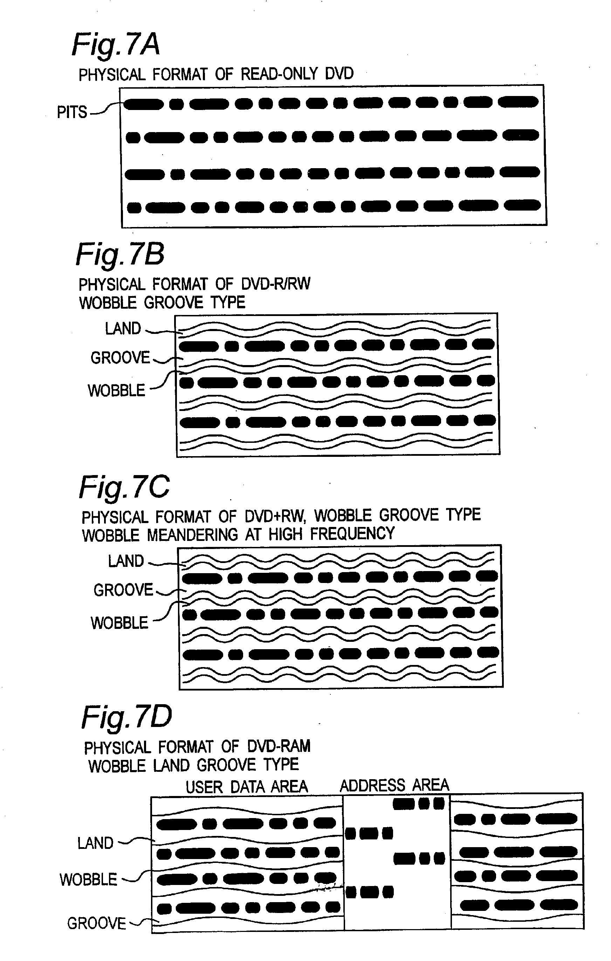

Although the configurations of the recording surfaces of a commercially available press-formed disk and a recordable disk are schematically shown in Figs. 4A and 4B, concrete physical formats shown in Figs. 7A to 7D are also available. For example, Fig. 7A shows a physical format of playback-only (ROM) DVD. As a recordable disk, for example, Fig. 7B shows a physical format of a DVD-R/RW having a wobble groove pattern, Fig. 7C shows a physical format of a DVD+RW disk having a high-frequency meandering wobble groove pattern, and Fig. 7D shows a physical format of a DVD-RAM disk having a wobble land groove pattern.

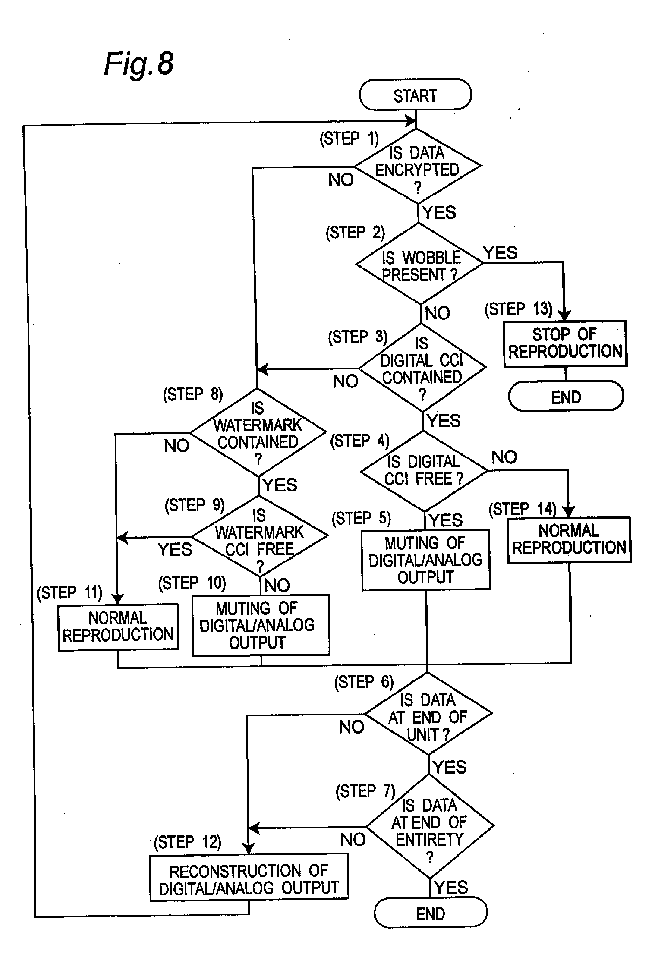

Fig. 8 is a flowchart showing an optical disk reproduction controlling operation according to an embodiment of the present invention. A specific feature of the reproduction controlling method of the present embodiment different from the conventional one resides in the fact that a wobble detection step is incorporated, and when a wobble pattern is detected to be present in encrypted contents data of a disk, the reproduction of the disk is stopped.

The optical disk reproduction controlling method is described below referring to the flowchart shown in Fig. 8. In Step 1 of the operation, it is determined whether or not the audio contents data under reproduction is encrypted by detecting encryption in each digital audio data unit. When the contents data is encrypted ("YES" in Step 1), it is then examined through the wobble detection whether a wobble pattern is present or not (Step 2).

When the wobble pattern is detected ("YES" in Step 2), the disk to be reproduced is determined as an unauthorized copy disk because the wobble pattern should not be included in the encrypted contents data in a press-formed disk and the reproduction operation is stopped in Step 13. This reproduction control corresponds to the operation pattern shown in Column (b) of Fig. 3.

When the wobble pattern is not found ("NO" in Step 2), the digital CCI detection is executed in Step 3. When the digital CCI is present ("YES" in Step 3), it is examined in Step 4 whether or not the digital CCI is set for copy free. When "NO" in Step 4, it is judged that the disk is an authorized one because the copyright protection is intended and a normal reproduction operation is executed in Step 14.

When the digital CCI is set for copy free ("YES" in Step 4), both the digital output and the analog output are muted in Step 5 because there is no possibility of setting the digital CCI set for copy free while insisting the copyright protection.

This reproduction control corresponds to the operation pattern shown in Column (a) of Fig. 3. When the digital CCI is not present ("NO" in Step 3), the procedure enters a routine same as the case where the encryption is not present and the watermark detection is executed in Step 8.

Referring back to Step 1, when the contents data is not encrypted ("NO" in Step 1), it is examined in Step 8 whether the watermark CCI is present or not regardless of presence or absence of the wobble pattern. When the watermark CCI is found ("YES" in Step 8), it is examined in Step 9 whether or not the watermark CCI is set for copy free. When "YES" in Step 9 or when the watermark CCI is not present ("NO" in Step 8), the normal reproduction is carried out (Step 11). When the watermark CCI is not set for copy free ("NO" in Step 9), it is judged that the copy disk is an unauthorized one and the digital and analog outputs are muted (Step 10). This reproduction control corresponds to the operation pattern shown in Column (c) of Fig. 3.

The above procedure is conducted in each reproduction unit. When the processing operation does not reach the end of the reproduction unit nor the end of the entire reproduction of the data stream ("NO" in Step 6, "NO" in Step 7), the muting of both the digital and analog outputs is canceled and the process is returned to Step 1. When the processing operation reaches the end of the entire reproduction of data stream ("YES" in Step 7), the procedure is terminated.

As set forth above, according to the present invention, a wobble detector is provided to cooperate with the digital CCI and the watermark CCI for preventing unauthorized copying of every original digital disk. More specifically, any conventional optical disk reproduction apparatus fails to identify an unauthorized copy when produced by digitally duplicating the whole contents of an original disk onto a recordable disk using, e.g., a personal computer.

In contrast, according to the optical disk reproduction apparatus of the present invention, a wobble detector is further arranged for identifying every unauthorized copy on the recordable disk and preventing the reproduction thereof.

## Claims

1. An optical disk reproduction apparatus for reproducing digital audio data containing at least one of electronic watermark copy control information and digital copy control information recorded on an optical disk, said apparatus comprising:
an encryption detector for detecting encryption in each digital audio contents unit of the digital audio data under reproduction;
a wobble detector for detecting a wobble pattern formed on the optical disk; and
a controller for controlling the reproduction using a detection result of the encryption detector and a detection result of the wobble detector,
wherein, in the case where the contents data is encrypted, the controller determines whether the wobble pattern is present or not, and when the wobble pattern is present, the controller stops the reproduction, and when the wobble pattern is not present, the controller controls the reproduction based on the digital copy control information.

2. The optical disk reproduction apparatus according to claim 1, wherein in the case where the contents data is not encrypted, the controller controls the reproduction based on the electronic watermark copy control information regardless of presence or absence of the wobble pattern.

3. An optical disk reproduction controlling method in reproducing digital audio data containing at least one of electronic watermark copy control information and digital copy control information recorded on an optical disk, comprising:
detecting encryption in each digital audio contents unit of the digital audio data under reproduction;
detecting a wobble pattern formed on the optical disk; and
controlling the reproduction using a detection result of the encryption detecting and a detection result of the wobble detecting,
wherein, in the case where the contents data is encrypted, the reproduction controlling includes determining whether the wobble pattern is present or not, and when the wobble pattern is present, the reproduction is stopped, and when the wobble pattern is not present, the reproduction is controlled based on the digital copy control information.

4. The optical disk reproduction controlling method according to claim 3, wherein in the case where the contents data is not encrypted, the reproduction is controlled based on the electronic watermark copy control information regardless of presence or absence of the wobble pattern.
